# EUROPÄISCHE PATENTANMELDUNG

(11) **EP 4 190 523 A1**
(43) Veröffentlichungstag der Anmeldung: **07.06.2023**
(21) Anmeldenummer: 21212057.0
(22) Anmeldetag: 02.12.2021
(51) Int. Cl.: B29B 9/06, B29C 48/00

(54) **VERFAHREN ZUM ANPASSEN EINER ANPRESSKRAFT EINER GRANULIERVORRICHTUNG, COMPUTERPROGRAMMPRODUKT, STEUERUNG, GRANULIERVORRICHTUNG SOWIE VERFAHREN ZUR GRANULIERUNG VON MATERIALSTRÄNGEN**

(71) Anmelder: Coperion GmbH, 70469 Stuttgart (DE)
(72) Erfinder: Tabeling, Mareike, 70327 Stuttgart (DE); Adler, Arne, 70567 Stuttgart (DE); Wolff, Moritz, 71640 Ludwigsburg (DE); Tratnik, Tomi, 71254 Ditzingen (DE); Hammer, Michael, 72076 Tübingen (DE); Röhling, Jonas, 70188 Stuttgart (DE); Bartl, Jürgen, 73035 Göppingen (DE)
(74) Vertreter: Ege Lee & Roider Patentanwälte

(57) **Zusammenfassung**

Verfahren zum Anpassen einer Anpresskraft (F_{hydraulisch}) von zumindest einem Messer (108) einer Granuliervorrichtung (100) zur Granulierung von Materialsträngen wie Kunststoff-Materialsträngen, wobei die Granuliervorrichtung (100) eine Krafterzeugungseinrichtung (112) zum Drücken des zumindest einen Messers (108) mit der Anpresskraft (F_{hydraulisch}) gegen eine Lochplatte (104) der Granuliervorrichtung (100) aufweist, umfassend die Schritte: Vorgeben (S11) einer Messeranpresskraft, Ermitteln (S13) einer hydrodynamischen Kraft (F_{hydrodynamisch}) wie Axialdruckkraft, welche durch Rotation des zumindest einen Messers (108) erzeugt wird und die auf das zumindest eine Messer (108) in Richtung zu der Lochplatte (104) hin wirkt, Ermitteln der Anpresskraft (F_{hydraulisch}) basierend auf der vorgegebenen Messeranpresskraft und der ermittelten hydrodynamischen Kraft (F_{hydrodynamisch}), und Bereitstellen der ermittelten Anpresskraft (F_{hydraulisch}) zum Anpassen der in der Granuliervorrichtung (100) vorhandenen Anpresskraft (F_{hydraulisch}), sowie ein entsprechendes Computerprogrammprodukt, eine Steuerung (102), eine Granuliervorrichtung (100) und ein Verfahren zur Granulierung von Materialsträngen wie Kunststoff-Materialsträngen.

## Beschreibung

### Beschreibung

Die Erfindung betrifft ein Verfahren zum Anpassen einer Anpresskraft von zumindest einem Messer einer Granuliervorrichtung zur Granulierung von Materialsträngen, wie Kunststoff-Materialsträngen. Außerdem betrifft die Erfindung ein entsprechendes Computerprogrammprodukt, eine Steuerung und eine Granuliervorrichtung. Ferner betrifft die Erfindung ein Verfahren zur Granulierung von Materialsträngen.

Aus dem Dokument DE 103 22 610 A1 ist eine Granuliervorrichtung bekannt, die eine Lochplatte und einen Messerkopf aufweist. Der Messerkopf weist mehrere Granuliermesser auf, die an einer stromabwärtigen Seite gegen die Lochplatte anliegen und mittels eines Antriebsmotors drehangetrieben werden, sodass durch die Lochplatte tretende Materialstränge zu Granulat geschnitten werden. Dabei werden die Granuliermesser notwendigerweise mit einer Anpresskraft gegen die Lochplatte gedrückt.

Die Position der Granuliermesser zu der Lochplatte bzw. die Höhe der Anpresskraft, insbesondere des Anpressdrucks, der Granuliermesser muss zur Erzielung einer hohen Schnittqualität als auch zur Minimierung von Verschleiß exakt eingestellt werden. Bei einer zu hohen Anpresskraft bzw. Anpressdruck werden die Granuliermesser zu stark abgenutzt und der Verschleiß an der Lochplatte nimmt zu. Bei einer zu geringen Anpresskraft bzw. Anpressdruck kann ein Schmierfilm auf der Lochplatte entstehen und dadurch eine geforderte Granulatqualität sich signifikant verringern, bis bei zu schlechter Qualität die Maschine abgeschaltet werden muss. Die Qualität des Granulats ist somit abhängig von der richtigen Wahl der Schnittparameter der Granuliervorrichtung.

Typischerweise wird die Anpresskraft bzw. der Anpressdruck manuell eingestellt und dann während des Betriebes konstant gelassen. Problematisch ist, dass sich im Betrieb einzelne Prozessparameter ändern können. Durch die manuelle Einstellung kann nicht automatisiert auf diese Änderungen reagiert werden. Mangelnde Anpassung oder Bedienungsfehler während des Betriebs können zu Beschädigungen der Granuliermesser und Lochplatte sowie zu Schwankungen in der Granulatqualität führen.

Der Erfindung liegt die Aufgabe zugrunde, ein eingangs genanntes Verfahren zum Anpassen einer Anpresskraft funktionell zu verbessern. Außerdem liegt der Erfindung die Aufgabe zugrunde, ein eingangs genanntes Computerprogramm-produkt, eine eingangs genannte Steuerung sowie eine eingangs genannte Granuliervorrichtung strukturell und/oder funktionell zu verbessern. Ferner liegt der Erfindung die Aufgabe zugrunde, ein eingangs genanntes Verfahren zur Granulierung von Materialsträngen funktionell zu verbessern.

Daher ist es insbesondere eine Aufgabe der vorliegenden Erfindung, ein Verfahren zum Anpassen der Anpresskraft und eine Granuliervorrichtung bereitzustellen, welche die im Zusammenhang mit dem Stand der Technik aufgezeigten Probleme reduzieren bzw. beseitigen kann.

Die Aufgabe wird gelöst mit einem Verfahren mit den Merkmalen des Anspruchs 1. Außerdem wird die Aufgabe gelöst mit einem Computerprogrammprodukt mit den Merkmalen des Anspruchs 14 sowie mit einer Steuerung mit den Merkmalen des Anspruchs 15. Ferner wird die Aufgabe gelöst mit einer Granuliervorrichtung mit den Merkmalen des Anspruchs 16 sowie mit einem Verfahren mit den Merkmalen des Anspruchs 18. Vorteilhafte Ausführungen und/oder Weiterbildungen sind Gegenstand der Unteransprüche.

Ein Verfahren kann zum Anpassen einer Anpresskraft von zumindest einem Messer einer Granuliervorrichtung sein und/oder dienen. Die Granuliervorrichtung kann zur Granulierung von Materialsträngen, wie Kunststoff-Materialsträngen, ausgebildet und/oder bestimmt sein. Die Granuliervorrichtung kann eine Unterwassergranuliervorrichtung sein. Die Granuliervorrichtung kann eine Lochplatte aufweisen. Das zumindest eine Messer kann ein Granuliermesser sein. Die Granuliervorrichtung kann mehrere Messer, wie Granuliermesser, aufweisen. Die Granuliervorrichtung kann eine Krafterzeugungseinrichtung aufweisen. Die Krafterzeugungseinrichtung kann ausgebildet sein, die Anpresskraft und/oder einen Anpressdruck zu erzeugen und/oder bereitzustellen. Die Krafterzeugungseinrichtung kann zum Drücken des zumindest einen Messers mit der Anpresskraft und/oder dem Anpressdruck gegen die Lochplatte der Granuliervorrichtung ausgebildet sein. Die Krafterzeugungseinrichtung kann eine hydraulische Einrichtung, wie Hydraulikeinrichtung, pneumatische Einrichtung, wie Pneumatikeinrichtung, hydro-pneumatische Einrichtung, elektronische Einrichtung, mechanische Einrichtung oder elektro-mechanische Einrichtung sein. Die Krafterzeugungseinrichtung kann einen Antrieb, beispielsweise einen hydraulischen, pneumatischen, hydro-pneumatischen, elektronischen oder elektro-mechanischen Antrieb, wie Linearantrieb oder Servoantrieb, aufweisen. Die Hydraulikeinrichtung kann ein Hydraulikaggregat und/oder ein Hydraulikdruckaggregat und/oder eine Hydraulikdruckeinheit sein. Die Hydraulikeinrichtung kann zumindest einen Kolben aufweisen. Der zumindest eine Kolben kann in einem Zylinder verschiebbar gelagert sein. Der zumindest eine Kolben kann mittels eines Hydraulikfluids beaufschlagbar sein und/oder verschoben werden. Die Hydraulikeinrichtung kann derart angesteuert werden, dass sich die Anpresskraft und/oder ein Anpressdruck einstellt und/oder dass das zumindest eine Messer mit der Anpresskraft und/oder dem Anpressdruck gegen die Lochplatte gedrückt wird. Der zumindest einen Kolben kann, insbesondere zum Erreichen der Anpresskraft und/oder des Anpressdrucks, verschoben werden.

Das Verfahren kann den Schritt umfassen: Vorgeben einer Messeranpresskraft. Die Messeranpresskraft kann als Sollwert vorgegeben sein oder werden. Die Messeranpresskraft und/oder der Sollwert der Messeranpresskraft kann von Eigenschaften und/oder Anzahl der Messer und/oder von Eigenschaften des zu granulierenden Materials und/oder von weiteren Prozessparametern abhängig sein. Die Eigenschaften der Messer können Materialeigenschaften der Messer und/oder Schärfegrade und/oder Anstellwinkel der Messer umfassen.

Das Verfahren kann den Schritt umfassen: Ermitteln der Anpresskraft basierend auf der vorgegebenen Messeranpresskraft und/oder einer, beispielsweise ermittelten, hydrodynamischen Kraft.

Das Verfahren kann den Schritt umfassen: Bereitstellen der ermittelten Anpresskraft zum Anpassen der in der Granuliervorrichtung vorhandenen Anpresskraft.

Die Anpresskraft kann eine Anpressdruckkraft und/oder hydraulische Kraft, wie Hydraulikkraft, sein. Die Anpresskraft kann die Differenz zwischen einer, beispielsweisen axialen, Vorwärtskraft und einer, beispielsweisen axialen, Rückwärtskraft sein. Die Krafterzeugungseinrichtung kann ausgebildet sein, die Vorwärtskraft und/oder Rückwärtskraft zu erzeugen und/oder bereitzustellen.

Das Verfahren kann den Schritt umfassen: Bereitstellen von zumindest einem Parameter, beispielsweise Hydraulikparameter, der Krafterzeugungseinrichtung, beispielsweise Hydraulikeinrichtung. Das Verfahren kann den Schritt umfassen: Berechnen eines Drucks, wie Anpressdruck und/oder Hydraulikdruck, basierend auf der bereitgestellten und/oder ermittelten Anpresskraft und/oder dem bereitgestellten zumindest einen Parameter, wie Hydraulikparameter, der Krafterzeugungseinrichtung. Das Verfahren kann den Schritt umfassen: Bereitstellen des berechneten Drucks, wie Anpressdruck und/oder Hydraulikdruck, insbesondere als neuen Sollwert, zum Anpassen des in der Granuliervorrichtung (100) vorhandenen Drucks, wie Anpressdruck und/oder Hydraulikdruck. Der berechnete Druck, wie Anpressdruck und/oder Hydraulikdruck, kann ein Sollwert, wie Soll-Druck und/oder Soll-Anpressdruck und/oder Soll-Hydraulikdruck, sein. Der berechnete Druck, wie Anpressdruck und/oder Hydraulikdruck, kann ein, beispielsweise axialer Vorwärtsdruck, der Krafterzeugungseinrichtung, insbesondere der Hydraulikeinrichtung, sein. Der berechnete Druck kann ein Soll-Vorwärtsdruck der Krafterzeugungseinrichtung, insbesondere der Hydraulikeinrichtung, sein. Der zumindest eine Parameter, wie Hydraulikparameter, kann eine dem berechneten Druck, wie Anpressdruck und/oder Hydraulikdruck, zugeordnete erste Fläche, beispielsweise Kolbenfläche und/oder Kolbengesamtfläche, der Krafterzeugungseinrichtung, insbesondere der Hydraulikeinrichtung, sein. Der zumindest eine Parameter, wie Hydraulikparameter, kann ein, beispielsweise axialer, Rückwärtsdruck der Krafterzeugungseinrichtung, insbesondere der Hydraulikeinrichtung, sein. Der zumindest eine Parameter, wie Hydraulikparameter, kann eine dem Rückwärtsdruck zugeordnete zweite Fläche, wie Kolbenfläche und/oder Kolbengesamtfläche, der Krafterzeugungseinrichtung, insbesondere der Hydraulikeinrichtung, sein. Die Krafterzeugungseinrichtung, insbesondere die Hydraulikeinrichtung, kann mehrere, beispielsweise zwei, drei oder mehr Kolben und/oder zugehörige Zylinder aufweisen. Die Kolbengesamtfläche kann die Summe aller Kolbenflächen sein. Unter Kolbenfläche kann die Querschnittsfläche des Kolbens verstanden werden. Die Anpresskraft kann das Resultat und/oder die Summe aller auf die Kolbenfläche und/oder Kolbengesamtfläche wirkenden Kräfte, beispielsweise Vorwärtskraft und/oder Rückwärtskraft, und/oder Drücke, beispielsweise Vorwärtsdruck und/oder Rückwärtsdruck, sein. Ein Anpressdruck kann durch die Anpresskraft definiert sein. Beispielsweise kann dieser Anpressdruck der Differenzdruck zwischen Vorwärts- und Rückwärtsdruck sein. Die Vorwärtskraft kann durch den Vorwärtsdruck und/oder durch die dem Vorwärtsdruck zugeordneten Fläche, wie Kolbenfläche und/oder Kolbengesamtfläche, definiert sein und/oder berechnete werden. Die Rückwärtskraft kann durch den Rückwärtsdruck und/oder durch die dem Rückwärtsdruck zugeordneten Fläche, wie Kolbenfläche und/oder Kolbengesamtfläche, definiert sein und/oder berechnet werden.

Soweit nicht anders angegeben oder es sich aus dem Zusammenhang nicht anders ergibt, bezieht sich die Angabe "axial" auf eine Erstreckungsrichtung einer Drehachse des zumindest einen Messers und/oder eines Messerkopfs und/oder einer Bewegungsrichtung des zumindest einen Stellglieds, wie Kolbens, der Krafterzeugungseinrichtung, insbesondere der Hydraulikeinrichtung. Soweit nicht anders angegeben oder es sich aus dem Zusammenhang nicht anders ergibt, beziehen sich die Angaben "Vorwärts" und "Rückwärts" in eine Richtung entlang der Drehachse bzw. Bewegungsrichtung. "Vorwärts" kann dann einer Richtung, beispielsweise Zustellrichtung des zumindest einen Messers, auf die Lochplatte zu entsprechen. "Rückwärts" kann dann einer Richtung weg von der Lochplatte entsprechen, beispielsweise eine zur Vorwärtsrichtung entgegensetzte Richtung.

Der Rückwärtsdruck kann sensorisch erfasst werden. Der Rückwärtsdruck kann ein erfasster Istwert sein. Die dem Druck, wie Anpressdruck und/oder Hydraulikdruck, insbesondere Vorwärtsdruck, zugeordnete erste Fläche kann vorgegeben sein oder werden. Die dem Druck, wie Anpressdruck und/oder Hydraulikdruck, insbesondere Vorwärtsdruck, zugeordnete erste Fläche kann eine von der Baugröße der Granuliervorrichtung und/oder des zumindest einen Stellglieds und/oder Kolbens abhängige Größe, wie Fläche und/oder Querschnittsfläche, sein. Die dem Rückwärtsdruck zugeordnete zweite Fläche kann vorgegeben sei oder werden. Die dem Rückwärtsdruck zugeordnete zweite Fläche kann eine von der Baugröße der Granuliervorrichtung und/oder des zumindest einen Stellglieds und/oder Kolbens abhängige Größe, wie Fläche und/oder Querschnittsfläche, sein.

Der Druck, wie Anpressdruck und/oder Hydraulikdruck, insbesondere Vorwärtsdruck, kann basierend auf der dem Druck, wie Anpressdruck und/oder Hydraulikdruck, insbesondere Vorwärtsdruck, zugeordneten ersten Fläche und/oder dem Rückwärtsdruck und/oder der dem Rückwärtsdruck zugeordneten zweiten Fläche berechnet werden. Dabei kann das Produkt aus dem Rückwärtsdruck mit der dem Rückwärtsdruck zugeordneten zweiten Fläche gebildet bzw. berechnet werden.

Das Verfahren kann den Schritt umfassen: Ermitteln einer hydrodynamischen Kraft, beispielsweise Axialdruckkraft. Die hydrodynamische Kraft kann durch Rotation des zumindest einen Messers erzeugt sein oder werden. Die hydrodynamische Kraft kann auf das zumindest eine Messer in Richtung zu der Lochplatte, beispielsweise in Vorwärtsrichtung, hin wirken.

Die hydrodynamische Kraft kann berechnet oder sensorisch erfasst sein oder werden. Die hydrodynamische Kraft kann basierend auf einer Drehzahl, beispielsweise Messerdrehzahl und/oder Messerkopfdrehzahl, berechnet und/oder geschätzt und/oder ermittelt sein oder werden.

Die Drehzahl kann, beispielsweise als Istwert, wie Ist-Drehzahl, sensorisch erfasst sein oder werden. Die Drehzahl kann als Sollwert, wie Soll-Drehzahl, vorgegeben sein oder werden. Es kann sowohl eine Drehzahl als Istwert sensorisch erfasst sein oder werden als auch eine Drehzahl als Sollwert vorgegeben sein oder werden. Es kann zunächst eine Drehzahl als Sollwert vorgegeben sein oder werden und dann eine sich daraufhin einstellende Drehzahl als Istwert sensorisch erfasst sein oder werden. Die hydrodynamische Kraft kann basierend auf der erfassten Ist-Drehzahl berechnet und/oder geschätzt und/oder ermittelt sein oder werden. Die Drehzahl kann die Drehzahl des zumindest einen Messers und/oder des Messerkopfs um die Drehachse sein. Die Drehzahl kann die Drehzahl einer Antriebseinrichtung zum Drehantreiben des zumindest einen Messers und/oder des Messerkopfs um die Drehachse sein. Der Antriebseinrichtung kann die Soll-Drehzahl vorgegeben sein oder werden. Die Soll-Drehzahl kann, beispielsweise durch einen Bediener, eingegeben sein oder werden. Die Soll-Drehzahl kann beispielsweise als Initialeingabe erfolgen. Die Soll-Drehzahl kann, beispielsweise durch einen Bediener, als Initial-Soll-Drehzahl eingegeben sein oder werden.

Die als Sollwert vorgegebene Drehzahl, wie Soll-Drehzahl, kann berechnet sein oder werden. Die Berechnung der als Sollwert vorgegebenen Drehzahl, wie Soll-Drehzahl, kann auf einem Durchsatzwert, wie Materialdurchsatzwert, und/oder einer Granulatanzahl und/oder einem Korrekturfaktor und/oder einer Messeranzahl und/oder einer Lochanzahl der Lochplatte basieren. Der Durchsatzwert kann einen Durchsatz des granulierten Materials definieren. Der Durchsatzwert kann ein Durchsatz von Kilogramm pro Stunde sein. Der Durchsatzwert kann ein aktueller und/oder, beispielsweise sensorisch, erfasster Durchsatz sein. Der Durchsatzwert kann, beispielsweise durch einen Bediener, eingegeben sein oder werden. Die Granulatanzahl kann die Anzahl von Granulat und/oder Pellets pro Gramm definieren bzw. sein. Zusätzlich oder alternativ zur Granulatanzahl kann die Masse einer definierten Anzahl von Granulat und/oder Pellets, insbesondere zur Berechnung der als Sollwert vorgegebenen Drehzahl, verwendet werden. Die Granulatanzahl kann eine Pelletanzahl sein. Die Granulatanzahl kann, beispielsweise durch einen Bediener, eingegeben sein oder werden. Die Granulatanzahl kann empirisch bestimmt sein oder werden. Die Granulatanzahl kann eine aktuelle und/oder, beispielsweise sensorisch, erfasste Granulatanzahl sein. Die Granulatanzahl kann auf einer zuvor durchgeführten Messung basieren. Die Messeranzahl kann der Anzahl der auf dem Messerkopf angeordneten und/oder installierten Messer entsprechen. Die Messeranzahl kann, beispielsweise durch einen Bediener, eingegeben sein oder werden. Die Lochanzahl kann der Anzahl an Löchern in der Lochplatte entsprechen, insbesondere der Löcher, aus der das zu granulierende Material austritt. Die Lochanzahl kann, beispielsweise durch einen Bediener, eingegeben sein oder werden. Der Korrekturfaktor kann zuvor berechnet und/oder definiert sein oder werden. Der Korrekturfaktor kann, beispielsweise durch einen Bediener, eingegeben sein oder werden. Der Korrekturfaktor kann, beispielsweise in einer Steuerung, hinterlegt sein oder werden. Der Korrekturfaktor kann von der Anzahl der offenen Löcher, wie Bohrungen, der Lochplatte abhängig sein.

Bei der Berechnung der als Sollwert vorgegebenen Drehzahl, wie Soll-Drehzahl, kann das Produkt aus dem Durchsatzwert und der Granulatanzahl gebildet und/oder berechnet sein oder werden. Bei der Berechnung der als Sollwert vorgegebenen Drehzahl, wie Soll-Drehzahl, kann das Produkt aus dem Durchsatzwert, der Granulatanzahl und dem Korrekturfaktor gebildet und/oder berechnet sein oder werden. Bei der Berechnung der als Sollwert vorgegebenen Drehzahl, wie Soll-Drehzahl, kann das Produkt aus der Messeranzahl und der Lochanzahl gebildet und/oder berechnet sein oder werden. Bei der Berechnung der als Sollwert vorgegebenen Drehzahl, wie Soll-Drehzahl, kann das Produkt aus Durchsatzwert und Granulatanzahl durch das Produkt aus Messeranzahl und Lochanzahl geteilt bzw. dividiert sein oder werden, also die Division aus beiden Produkten gebildet sein oder werden. Bei der Berechnung der als Sollwert vorgegebenen Drehzahl, wie Soll-Drehzahl, kann das Produkt aus Durchsatzwert, Granulatanzahl und Korrekturfaktor durch das Produkt aus Messeranzahl und Lochanzahl geteilt bzw. dividiert sein oder werden, also die Division aus beiden Produkten gebildet sein oder werden.

Die hydrodynamische Kraft kann mittels einer Funktion, wie Polynomfunktion berechnet und/oder geschätzt und/oder ermittelt sein oder werden. Die Drehzahl, beispielsweise die als Istwert sensorisch erfasste Drehzahl, wie Ist-Drehzahl, kann die Variable und/oder Unbestimmte der Funktion sein. Die Funktion kann eine Funktion ersten, zweiten, dritten, vierten oder höheren Grades sein. Die Funktion kann ein oder mehrere Koeffizienten aufweisen. Die ein oder mehreren Koeffizienten können durch ein oder mehrere Parameter definiert sein oder werden. Jeder Koeffizient kann einem Parameter entsprechen oder ein Parameter sein. Der ein oder die mehreren Parameter können vorgegeben und/oder bestimmt, beispielsweise empirisch bestimmt, sein oder werden. Der ein oder die mehreren Parameter können auf zumindest einer bei zumindest einem Betriebsmodus und/oder Prozessmodus der Granuliervorrichtung ermittelten Datenreihe basieren. Der ein oder die mehreren Parameter können aus der zumindest einen Datenreihe ermittelt sein oder werden. Die zumindest eine Datenreihe kann eine empirische, insbesondere empirisch ermittelte, Datenreihe sein. Die zumindest eine Datenreihe kann aus Mittelwerten gebildet sein oder werden. Die zumindest eine Datenreihe kann eine Trendkurve und/oder Trendfunktion definieren und/oder bestimmen. Aus der zumindest einen Datenreihe kann eine Trendkurve und/oder Trendfunktion bestimmen sein oder werden. Der ein oder die mehreren Parameter können aus der Trendkurve und/oder Trendfunktion bestimmt bzw. ermittelt sein oder werden. Es können mehrere Datenreihen bei gleichen und/oder unterschiedlichen Betriebsmodi und/oder Prozessmodi, insbesondere der Granuliervorrichtung, erfasst sein oder werden. Der ein oder die mehreren Parameter können aus den mehreren Datenreihen ermittelt sein oder werden.

Die Berechnung der Anpresskraft und/oder des Drucks, wie Anpressdruck und/oder Hydraulikdruck und/oder Vorwärtsdruck, kann darauf basieren, dass die Messeranpresskraft die Summe aus der Anpresskraft, wie hydraulischen Kraft, und der hydrodynamischen Kraft ist. Die Messeranpresskraft kann die Summe aller auf den Messerkopf wirkenden Kräfte sein. Durch entsprechende Auflösung bzw. Umstellung dieser Formel kann die Anpresskraft bzw. der Druck, wie Anpressdruck und/oder Hydraulikdruck und/oder Vorwärtsdruck, definiert und/oder berechnet werden. Die Anpresskraft, wie hydraulische Kraft, kann auf den Hydraulikparametern basieren bzw. durch diese definiert sein und/oder mittels dieser berechnet sein oder werden. Die Anpresskraft, wie hydraulische Kraft, kann auf dem Druck, wie Anpressdruck und/oder Hydraulikdruck und/oder Vorwärtsdruck, der diesem Druck zugeordneten ersten Fläche, dem Rückwärtsdruck und/oder der dem Rückwärtsdruck zugeordneten zweiten Fläche basieren bzw. durch diese definiert sein und/oder mittels diesen berechnet sein oder werden. Die Anpresskraft, wie hydraulische Kraft, kann durch das Produkt aus dem Druck, wie Anpressdruck und/oder Hydraulikdruck und/oder Vorwärtsdruck, und der diesem Druck zugeordneten ersten Fläche definiert sein oder werden und/oder aus dem Produkt aus Rückwärtsdruck der dem Rückwärtsdruck zugeordneten zweiten Fläche definiert sein oder werden. Die Anpresskraft, wie hydraulische Kraft, kann durch die Differenz zwischen bzw. aus dem Produkt aus Druck, wie Anpressdruck und/oder Hydraulikdruck und/oder Vorwärtsdruck, und der diesem Druck zugeordneten ersten Fläche und dem Produkt aus Rückwärtsdruck und der dem Rückwärtsdruck zugeordneten zweiten Fläche definiert sein oder werden.

Die Anpresskraft kann basierend auf einer hydrostatischen Kraft ermittelt werden. Das Ermitteln der Anpresskraft kann auf der vorgegebenen Messeranpresskraft, der ermittelten hydrodynamischen Kraft und der hydrostatischen Kraft basieren. Die hydrostatische Kraft kann vorgegeben sein oder werden. Die hydrostatische Kraft kann basierend auf einem, beispielsweise ermittelten, wie sensorisch erfassten, Wasserdruck und/oder einer, beispielsweise vorgegebenen, Druckfläche bestimmt sein oder werden. Die Druckfläche kann durch einen Durchmesser, wie Dichtungsdurchmesser, definiert sein und/oder berechnet sein oder werden. Der Durchmesser kann ein mittlerer Durchmesser, wie mittlerer Dichtungsdurchmesser sein. Der Durchmesser kann der Durchmesser, beispielsweise im Bereich eines Gleitrings und/oder einer Dichtung, wie Gleitringdichtung, und/oder einer Stopfbuchspackung, einer Antriebswelle der Antriebseinrichtung sein. Die Antriebswelle kann die Drehachse definieren. Die Antriebswelle kann mit dem Messerkopf drehfest verbunden sein. Bei der Berechnung der hydrostatischen Kraft kann das Produkt aus der Druckfläche und des Wasserdrucks gebildet sein oder werden. Dabei kann die Druckfläche zum Quadrat bzw. mit einer Potenz mit dem Exponenten 2 eingehen. Also kann das Produkt aus Druckfläche zum Quadrat und des Wasserdrucks gebildet sein oder werden. Das Produkt aus Druckfläche zum Quadrat und des Wasserdrucks kann mit dem Wert *π*/4 multipliziert sein oder werden.

Die Berechnung der Anpresskraft und/oder des Drucks, wie Anpressdruck und/oder Hydraulikdruck und/oder Vorwärtsdruck, kann darauf basieren, dass die Messeranpresskraft die Summe aus der Anpresskraft, wie hydraulischen Kraft, der hydrodynamischen Kraft und der hydrostatischen Kraft ist. Durch entsprechende Auflösung bzw. Umstellung dieser Formel kann die Anpresskraft bzw. der Druck, wie Anpressdruck und/oder Hydraulikdruck und/oder Vorwärtsdruck, definiert und/oder berechnet werden.

Die Anpresskraft kann basierend auf einer Schmelzedruckkraft ermittelt werden. Das Ermitteln der Anpresskraft und/oder des Drucks, wie Anpressdruck und/oder Hydraulikdruck und/oder Vorwärtsdruck, kann auf der vorgegebenen Messeranpresskraft, der ermittelten hydrodynamischen Kraft und der Schmelzedruckkraft basieren. Das Ermitteln der Anpresskraft und/oder des Drucks, wie Anpressdruck und/oder Hydraulikdruck und/oder Vorwärtsdruck, kann auf der vorgegebenen Messeranpresskraft, der ermittelten hydrodynamischen Kraft, der hydrostatischen Kraft und der Schmelzedruckkraft basieren. Die Schmelzedruckkraft kann von einem mittels einer Extrusionsvorrichtung verursachten Schmelzedruck einer Materialschmelze abhängig sein und/oder mittels diesem berechnet sein oder werden.

Die Berechnung der Anpresskraft und/oder des Drucks, wie Anpressdruck und/oder Hydraulikdruck und/oder Vorwärtsdruck, kann darauf basieren, dass die Messeranpresskraft die Summe aus der Anpresskraft, wie hydraulischen Kraft, der hydrodynamischen Kraft und der Schmelzedruckkraft ist. Die Berechnung der Anpresskraft und/oder des Drucks, wie Anpressdruck und/oder Hydraulikdruck und/oder Vorwärtsdruck, kann darauf basieren, dass die Messeranpresskraft die Summe aus der hydraulischen Kraft, der hydrodynamischen Kraft, der hydrostatischen Kraft und der Schmelzedruckkraft ist. Durch entsprechende Auflösung bzw. Umstellung dieser Formel kann die Anpresskraft bzw. der Druck, wie Anpressdruck und/oder Hydraulikdruck und/oder Vorwärtsdruck, definiert und/oder berechnet werden.

Die Berechnung der Anpresskraft und/oder des Drucks, wie Anpressdruck und/oder Hydraulikdruck und/oder Vorwärtsdruck, kann automatisch und/oder wiederholt, beispielsweise während des Betriebs der Granuliervorrichtung, erfolgen. Beispielsweise kann die Anpresskraft und/oder der Druck, wie Anpressdruck und/oder Hydraulikdruck und/oder Vorwärtsdruck, fortlaufend und/oder kontinuierlich berechnet werden. Die Berechnung kann auch in definierten Zeitintervallen durchgeführt und/oder wiederholt werden.

Das Verfahren kann den Schritt umfassen: Bereitstellen des berechneten des Drucks, wie Anpressdruck und/oder Hydraulikdruck und/oder Vorwärtsdruck, der Krafterzeugungseinrichtung, wie Hydraulikeinrichtung, zum Anpassen des in der Granuliervorrichtung und/oder in der Krafterzeugungseinrichtung, wie Hydraulikeinrichtung, vorhandenen Drucks, wie Anpressdruck und/oder Hydraulikdruck und/oder Vorwärtsdruck. Der berechnete Druck, wie Anpressdruck und/oder Hydraulikdruck und/oder Vorwärtsdruck, der Krafterzeugungseinrichtung, wie Hydraulikeinrichtung, kann als, beispielsweise neuer, Sollwert, wie Soll-Druck, Soll-Anpressdruck, Soll-Hydraulikdruck oder Soll-Vorwärtsdruck, bereitgestellt werden. Der berechnete Druck, wie Anpressdruck und/oder Hydraulikdruck und/oder Vorwärtsdruck, der Krafterzeugungseinrichtung, wie Hydraulikeinrichtung, kann der Krafterzeugungseinrichtung, wie Hydraulikeinrichtung, als, beispielsweise Vorwärtsdruck und/oder Sollwert, wie Soll-Vorwärtsdruck, bereitgestellt werden. Dadurch kann der Druck, wie Anpressdruck und/oder Hydraulikdruck und/oder Vorwärtsdruck, der Krafterzeugungseinrichtung, wie Hydraulikeinrichtung, angepasst werden. Der berechnete Druck, wie Anpressdruck und/oder Hydraulikdruck und/oder Vorwärtsdruck, der Krafterzeugungseinrichtung, wie Hydraulikeinrichtung, kann automatisch und/oder wiederholt und/oder kontinuierlich, beispielsweise während des Betriebs der Granuliervorrichtung bereitgestellt und/oder angepasst werden. Beispielsweise kann der berechnete Druck, wie Anpressdruck und/oder Hydraulikdruck und/oder Vorwärtsdruck, der Krafterzeugungseinrichtung, wie Hydraulikeinrichtung, fortlaufend und/oder kontinuierlich bereitgestellt und/oder angepasst werden. Die Bereitstellung und/oder Anpassung kann auch in definierten Zeitintervallen durchgeführt und/oder wiederholt werden.

Das Verfahren, insbesondere zum Anpassen der Anpresskraft, kann als Computerprogramm zumindest teilweise auf einem Computer, Mikrocomputer, in einer Steuerung, in einer elektronischen Steuer- und/oder Recheneinheit, in einem Steuer- und/oder Rechengerät oder auf einem Speichermedium abgespeichert und/oder dort implementiert sein. Das Computerprogramm kann software-technisch auf eine oder mehrere Speichermedien, Steuerungen, Steuer- und/oder Recheneinheiten/geräte oder Computer, etc. verteilt sein.

Ein Computerprogrammprodukt kann eine Steuerung und/oder Vorrichtung, wie Granuliervorrichtung, dazu veranlassen, das vorstehend und/oder nachfolgend beschriebene Verfahren, insbesondere zum Anpassen der Anpresskraft, auszuführen. Ein Computerprogrammprodukt kann Programmcodemittel umfassen, um bei einem Ausführen des Computerprogrammproduktes auf einem Prozessor das vorstehend und/oder nachfolgend beschriebene Verfahren, insbesondere zum Anpassen der Anpresskraft, auszuführen. Ein Computerprogrammprodukt kann eine Vorrichtung, wie eine, beispielsweise elektronische, Steuerung und/oder Steuer- und/oder Recheneinheit/gerät, ein Steuerungssystem, ein Granuliervorrichtung, einen Granulierer, wie Unterwassergranulierer und/oder Unterwassergranuliervorrichtung, einen Prozessor oder einen Computer, dazu veranlassen, das vorstehend und/oder nachfolgend beschriebene Verfahren, insbesondere zum Anpassen der Anpresskraft, auszuführen. Hierzu kann das Computerprogrammprodukt entsprechende Datensätze und/oder Programmcodemittel und/oder das Computerprogramm und/oder ein Speichermedium zum Speichern der Datensätze bzw. des Programms aufweisen.

Eine Steuerung, wie Steuereinheit oder Steuergerät, kann für eine Granuliervorrichtung, wie Unterwassergranuliervorrichtung, sein. Die Steuerung kann zum Einsatz in einer Granuliervorrichtung eingerichtet und bestimmt sein. Die Steuerung kann einen Mikrocomputer und/oder Prozessor aufweisen. Die Steuerung kann einen oder mehrere Sensoren umfassen und/oder mit diesen verbunden sein. Die Steuerung kann das vorstehend und/oder nachfolgend beschriebene Computerprogrammprodukt umfassen. Die Steuerung kann einen Speicher aufweisen. Das Computerprogrammprodukt kann in dem Speicher gespeichert sein. Die Steuerung kann dazu eingerichtet und/oder bestimmt sein, das vorstehend und/oder nachfolgend beschriebene Verfahren, insbesondere zum Anpassen der Anpresskraft, durchzuführen.

Eine Granuliervorrichtung kann zur Granulierung von Materialsträngen, wie Kunststoff-Materialsträngen, ausgebildet und/oder bestimmt sein. Die Granuliervorrichtung kann dazu eingerichtet und/oder bestimmt sein, das vorstehend und/oder nachfolgend beschriebene Verfahren, insbesondere zum Anpassen der Anpresskraft und/oder zur Granulierung von Materialsträngen, durchzuführen. Die Granuliervorrichtung kann wie vorstehend und/oder nachfolgend beschrieben ausgebildet sein und/oder angesteuert und/oder geregelt werden. Die Granuliervorrichtung kann die vorstehend und/oder nachfolgend beschriebe Steuerung aufweisen.

Die Granuliervorrichtung kann eine Unterwassergranuliervorrichtung sein. Die Granuliervorrichtung kann eine Lochplatte aufweisen. Die Lochplatte kann zur Erzeugung von Materialsträngen dienen und/oder ausgebildet sein. Die Granuliervorrichtung kann zumindest ein Messer aufweisen. Das zumindest eine Messer kann ein Granuliermesser sein. Die Granuliervorrichtung kann mehrere Messer, wie Granuliermesser, aufweisen. Die Granuliervorrichtung kann einen Messerkopf aufweisen. Der Messerkopf kann das zumindest eine Messer bzw. die Masser aufweisen. Der Messerkopf kann zumindest ein Messerflügel aufweisen. Der Messerkopf kann mehrere Messerflüge aufweisen, beispielsweise eine entsprechend der Messeranzahl korrespondiere Anzahl an Messerflügeln. Das zumindest eine Messer bzw. die Messer kann/können mit dem Messerkopf und/oder mit dessen Messerflügel verbunden, beispielsweise verschraubt, sein. Der zumindest eine Messerflügel bzw. die Messerflügel kann/können mit einer Welle, wie Antriebswelle, einer Antriebseinrichtung verbunden sein. Der Messerkopf kann zur Erzeugung von Granulat aus den Materialsträngen dienen und/oder ausgebildet sein. Der Messerkopf kann an einer stromabwärtigen Seite der Lochplatte angeordnet sein. Die Granuliervorrichtung kann eine Antriebseinrichtung aufweisen. Die Antriebseinrichtung kann zum Drehantreiben des Messerkopfs um eine Drehachse dienen und/oder ausgebildet sein. Die Antriebseinrichtung kann die Welle, wie Antriebswelle, aufweisen. Die Welle kann die Drehachse definieren. Die Drehachse kann konzentrisch oder exzentrisch zu der Lochplatte angeordnet sein. Die Granuliervorrichtung kann eine Granulierhaube aufweisen. Die Granulierhaube kann einteilig, zweiteilig oder mehrteilig sein. Die Lochplatte und der Messerkopf können von der Granulierhaube umgeben und/oder zumindest teilweise oder vollständig eingeschlossen sein oder werden. Die Granulierhaube kann vollständig oder teilweise mit Wasser gefüllt sein oder werden. Die Granuliervorrichtung kann eine, insbesondere in die Granulierhaube mündende, Wasser-Zulauf-Leitung aufweisen. Die Granuliervorrichtung kann eine, insbesondere aus der Granulierhaube ausmündende, Wasser-Granulat-Ablauf-Leitung aufweisen. Die Granuliervorrichtung kann eine Krafterzeugungseinrichtung aufweisen. Die Krafterzeugungseinrichtung kann zum Drücken des zumindest einen Messers bzw. der Messer mit der Anpresskraft und/oder Anpressdruck gegen die Lochplatte dienen und/oder ausgebildet sein. Die Krafterzeugungseinrichtung kann ausgebildet sein, das zumindest eine Messer bzw. die Messer, den Messerkopf und/oder die Antriebseinrichtung, beispielsweise in Längsrichtung der Granuliervorrichtung und/oder in Vorwärts- und/oder Rückwärtsrichtung und/oder in Richtung bzw. entlang der Drehachse, zu bewegen bzw. zu verfahren. Die Krafterzeugungseinrichtung kann wie vorstehend und/oder nachfolgend beschrieben ausgebildet sein und/oder angesteuert und/oder geregelt werden. Die Krafterzeugungseinrichtung kann eine hydraulische Einrichtung, wie Hydraulikeinrichtung, pneumatische Einrichtung, wie Pneumatikeinrichtung, hydro-pneumatische Einrichtung, elektronische Einrichtung, mechanische Einrichtung oder elektro-mechanische Einrichtung sein. Die Krafterzeugungseinrichtung kann einen Antrieb, beispielsweise einen hydraulischen, pneumatischen, hydro-pneumatischen, elektronischen oder elektro-mechanischen Antrieb, wie Linearantrieb oder Servoantrieb, aufweisen. Die Hydraulikeinrichtung kann ein Hydraulikaggregat und/oder ein Hydraulikdruckaggregat und/oder eine Hydraulikdruckeinheit sein. Die Hydraulikeinrichtung kann zumindest einen Kolben aufweisen. Der zumindest eine Kolben kann in einem Zylinder verschiebbar gelagert sein. Der zumindest eine Kolben kann mittels eines Hydraulikfluids beaufschlagbar sein und/oder verschoben werden.

Ein Verfahren kann zur Granulierung von Materialsträngen, wie Kunststoff-Materialsträngen, dienen und/oder sein. Das Verfahren kann den Schritt umfassen: Bereitstellen einer Granuliervorrichtung. Die Granuliervorrichtung kann wie vorstehend und/oder nachfolgend beschrieben ausgebildet sein und/oder angesteuert und/oder geregelt werden. Das Verfahren kann ferner den Schritt umfassen: Fördern einer Materialschmelze, wie Kunststoffmaterialschmelze, durch die Lochplatte derart, dass Materialstränge erzeugt werden. Das Verfahren kann ferner den Schritt umfassen: Drehantreiben des Messerkopfs mittels der Antriebseinrichtung derart, dass die Materialstränge mittels des zumindest einen Messers zu Granulat geschnitten werden. Dabei kann die Hydraulikeinrichtung das zumindest eine Messer bzw. die Messer mit der Anpresskraft und/oder dem Anpressdruck gegen die Lochplatte drücken.

Mit der Erfindung kann die Anpresskraft und/oder der Anpressdruck optimal eingestellt bzw. geregelt werden. Der Verschleiß, beispielsweise an Messern und Lochplatten, kann reduziert werden. Damit können Kosten optimiert und Maschinenabstellungen vermieden werden. Die Granulatqualität kann verbessert werden.

Nachfolgend werden Ausführungsbeispiele der Erfindung unter Bezugnahme auf Figuren näher beschrieben, dabei zeigen schematisch und beispielhaft:
- Fig. 1: ein Ablaufschema für ein Verfahren zum Anpassen der Anpresskraft;
- Fig. 2: eine Granuliervorrichtung mit Steuerung; und
- Fig. 3: ein Ablaufschema für ein Verfahren zur Granulierung von Materialsträngen.

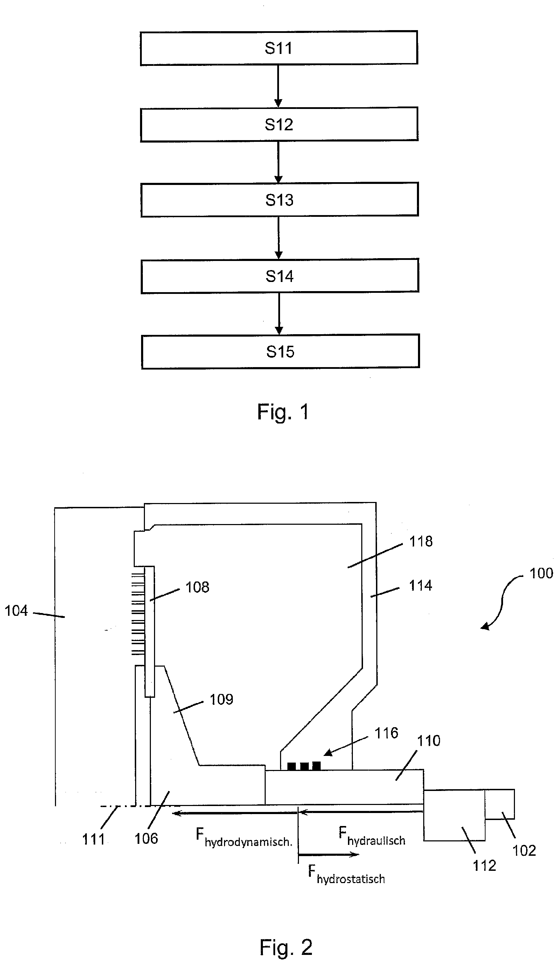

Fig. 1 zeigt schematisch ein Ablaufschema für ein Verfahren zum Anpassen der Anpresskraft zumindest eines Messers, wie Granuliermesser, einer Granuliervorrichtung zur Granulierung von Materialsträngen, wie Kunststoff-Materialsträngen, wobei die Granuliervorrichtung eine Hydraulikeinrichtung zum Drücken des zumindest einen Messers mit der Anpresskraft gegen eine Lochplatte der Granuliervorrichtung aufweist. Die Anpresskraft kann eine hydraulische Kraft, insbesondere der Hydraulikeinrichtung, sein.

In einem Schritt S11 wird eine Messeranpresskraft als Sollwert vorgegeben. Die Messeranpresskraft ist von Eigenschaften und Anzahl der Messer und von Eigenschaften des zu granulierenden Materials abhängig.

In einem Schritt S12 wird zumindest einem Hydraulikparameter der Hydraulikeinrichtung bereitgestellt. Beispielsweise können drei Hydraulikparameter bereitgestellt werden, wie eine einem Vorwärtsdruck zugeordnete erste Fläche, ein Rückwärtsdruck und eine dem Rückwärtsdruck zugeordnete zweite Fläche.

In einem Schritt S13 wird eine hydrodynamische Kraft, wie Axialdruckkraft, ermittelt, welche durch Rotation des zumindest einen Messers erzeugt wird und die auf das zumindest eine Messer in Richtung zu der Lochplatte hin wirkt.

Dabei wird die hydrodynamische Kraft basierend auf einer sensorisch erfassten Ist-Drehzahl, insbesondere Messerdrehzahl und/oder Messerkopfdrehzahl, berechnet, wobei zuvor eine Soll-Drehzahl vorgegeben wurde. Die Ist-Drehzahl wird somit auf eine vorgegeben Soll-Drehzahl eingeregelt. Die als Sollwert vorgegebene Drehzahl wird basierend auf einem Durchsatzwert, wie Materialdurchsatzwert, einer Granulatanzahl, einem Korrekturfaktor, einer Messeranzahl und einer Lochanzahl der Lochplatte berechnet.

Die Berechnung der hydrodynamischen Kraft erfolgt mittels einer Funktion, wie Polynomfunktion, wobei die Ist-Drehzahl die Variable und/oder Unbestimmte der Funktion ist, die Funktion eine Funktion zweiten Grades ist und die Funktion mehrere, beispielsweise drei, Koeffizienten aufweist, die durch mehrere, beispielsweise drei, Parameter definiert sind. Die mehreren Parameter können vorgegeben sein oder werden. Beispielsweise können die mehreren Parameter zuvor empirisch bestimmt worden sein und basieren auf zumindest einer bei zumindest einem Betriebsmodus der Granuliervorrichtung ermittelten Datenreihe.

In einem Schritt S14 wird der Vorwärtsdruck der Hydraulikeinrichtung basierend auf der vorgegebenen Messeranpresskraft, dem bereitgestellten zumindest einen Hydraulikparameter, beispielsweise die drei Hydraulikparameter, und der ermittelten hydrodynamischen Kraft berechnet. Die Berechnung des Vorwärtsdruck basiert darauf, dass die Messeranpresskraft die Summe aus der hydraulischen Kraft und der hydrodynamischen Kraft ist Durch entsprechende Auflösung bzw. Umstellung dieser Formel kann der Vorwärtsdruck definiert und berechnet werden. Der berechnete Vorwärtsdruck ist ein Soll-Vorwärtsdruck der Hydraulikeinrichtung.

In einem Schritt S15 wird der berechneten Vorwärtsdruck, insbesondere als neuer Sollwert für die Hydraulikeinrichtung, zum Anpassen des in der Granuliervorrichtung vorhandenen Anpresskraft bzw. Anpressdrucks bereitgestellt. Dadurch kann der Vorwärtsdruck und damit die Anpresskraft bzw. der Anpressdruck angepasst werden. Durch wiederholtes Ausführen des Verfahrens kann der Vorwärtsdruckautomatisch und wiederholt während des Betriebs der Granuliervorrichtung bereitgestellt und angepasst werden.

Fig. 2 zeigt schematisch eine Granuliervorrichtung 100 zur Granulierung von Materialsträngen, wie Kunststoff-Materialsträngen, die dazu eingerichtet und bestimmt ist, das bzw. die vorstehend und/oder nachfolgend beschriebenen Verfahren, insbesondere gemäß Fig. 1 und/oder 3, auszuführen. Hierfür weist die Granuliervorrichtung 100 eine Steuerung 102 mit einem Prozessor und einem entsprechenden Computerprogrammprodukt auf.

Die Granuliervorrichtung 100 ist als Unterwassergranuliervorrichtung ausgebildet und umfasst eine Lochplatte 104 zur Erzeugung von Materialsträngen, einen Messerkopf 106 mit zumindest einem Messer 108, der zur Erzeugung von Granulat aus den Materialsträngen an einer stromabwärtigen Seite der Lochplatte 104 angeordnet ist, eine Antriebseinrichtung mit einer Drehwelle 110 zum Drehantreiben des Messerkopfs 108 um eine Drehachse 111 und eine Hydraulikeinrichtung 112 zum Drücken des zumindest einen Messers 108 mit der Anpresskraft bzw. dem Anpressdruck gegen die Lochplatte 104. Der Messerkopf 106 weist ferner Messerflügel 109 auf, an denen die Messer 108 befestigt sind. Die Messerflügel 106 sind mit der Drehwelle 110 fest verbunden.

Die Granuliervorrichtung 100 weist ferner eine Granulierhaube 114 auf, die die Lochplatte 104 und die Drehwelle 110 zumindest abschnittsweise einhaust. Zwischen der Granulierhaube 114 und der Drehwelle 110 ist eine Dichtung 116, beispielsweise eine Gleitringdichtung 116, wirksam angeordnet. Die Granulierhaube 114 definiert bzw. begrenzt eine Kammer 118, innerhalb derer der Messerkopf 106 mit den Messern 108 angeordnet ist.

Die in Fig. 2 dargestellten Pfeile veranschaulichen die hydrodynamische Kraft F_{hydrodynamisch}, die hydraulische Kraft F_{hydraulisch} und die hydrostatische Kraft F_{hydrostatisch}.

Im Übrigen wird ergänzend insbesondere auf Fig. 1 und die zugehörige Beschreibung verwiesen.

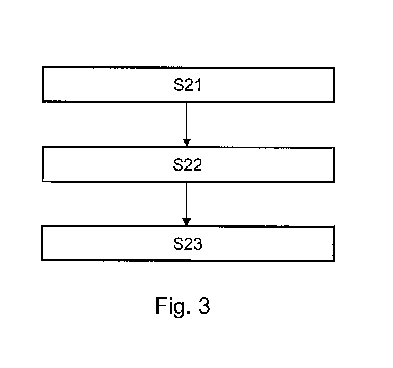

Fig. 3 zeigt schematisch ein Ablaufschema für ein Verfahren zur Granulierung von Materialsträngen.

In einem Schritt S21 wird eine Granuliervorrichtung 100 bereitgestellt. Die Granuliervorrichtung 100 ist wie vorstehend und/oder nachfolgend beschrieben, insbesondere gemäß Fig. 2, ausgebildet.

In einem Schritt S22 wird eine Materialschmelze, wie Kunststoffmaterialschmelze, durch die Lochplatte 104 derart gefördert, dass Materialstränge erzeugt werden.

In einem Schritt S23 wird der Messerkopf 106 mittels der Antriebseinrichtung derart drehangetrieben, dass die Materialstränge mittels des zumindest einen Messers 108 zu Granulat geschnitten werden, wobei die Hydraulikeinrichtung 112 das zumindest eine Messer 108 mit der Anpresskraft bzw. dem Anpressdruck gegen die Lochplatte 104 drückt.

Im Übrigen wird ergänzend insbesondere auf Fign. 1 und 2 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte der Verfahren kann variiert werden. Die Verfahren können miteinander kombiniert werden, beispielsweise zu einem Gesamtverfahren.

### Bezugszeichen

- S11: Schritt zum Vorgeben einer Messeranpresskraft
- S12: Schritt zum Bereitstellen von Hydraulikparameter
- S13: Schritt zum Ermitteln einer hydrodynamischen Kraft
- S14: Schritt zum Berechnen des Vorwärtsdrucks
- S15: Schritt zum Bereitstellen des berechneten Vorwärtsdrucks

- 100: Granuliervorrichtung
- 102: Steuerung
- 104: Lochplatte
- 106: Messerkopf
- 108: Messer
- 109: Messerflügel
- 110: Drehwelle
- 111: Drehachse
- 112: Hydraulikeinrichtung
- 114: Granulierhaube
- 116: Gleitringdichtung
- 118: Kammer

- F_{hydrodynamisch}: hydrodynamische Kraft
- F_{hydraulisch}: hydraulische Kraft
- F_{hydrostatisch}: hydrostatische Kraft

- S21: Schritt zum Bereitstellen einer Granuliervorrichtung
- S22: Schritt zum Fördern von Materialschmelze und Erzeugen der Materialstränge
- S23: Schritt zum Drehantreiben des Messerkopfs und Drücken der Messer mit dem Anpressdruck gegen die Lochplatte

## Patentansprüche

1. Verfahren zum Anpassen einer Anpresskraft (F_{hydraulisch}) von zumindest einem Messer (108) einer Granuliervorrichtung (100) zur Granulierung von Materialsträngen, wie Kunststoff-Materialsträngen, wobei die Granuliervorrichtung (100) eine Krafterzeugungseinrichtung (112) zum Drücken des zumindest einen Messers (108) mit der Anpresskraft (F_{hydraulisch}) gegen eine Lochplatte (104) der Granuliervorrichtung (100) aufweist, umfassend die Schritte:
- Vorgeben (S11) einer Messeranpresskraft;
- Ermitteln (S13) einer hydrodynamischen Kraft (F_{hydrodynamisch}), wie Axialdruckkraft, welche durch Rotation des zumindest einen Messers (108) erzeugt wird und die auf das zumindest eine Messer (108) in Richtung zu der Lochplatte (104) hin wirkt;
- Ermitteln der Anpresskraft (F_{hydraulisch}) basierend auf der vorgegebenen Messeranpresskraft und der ermittelten hydrodynamischen Kraft (F_{hydrodynamisch}); und
- Bereitstellen der ermittelten Anpresskraft (F_{hydraulisch}) zum Anpassen der in der Granuliervorrichtung (100) vorhandenen Anpresskraft (F_{hydraulisch}).

2. Verfahren nach Anspruch 1, **dadurch gekennzeichnet, dass** die Messeranpresskraft als Sollwert vorgegeben wird, der insbesondere von Eigenschaften und/oder Anzahl der Messer (108) und/oder von Eigenschaften des zu granulierenden Materials abhängig ist.

3. Verfahren nach wenigstens einem der vorhergehenden Ansprüche, **dadurch gekennzeichnet, dass** die Krafterzeugungseinrichtung (112) eine hydraulische Einrichtung, wie Hydraulikeinrichtung, pneumatische Einrichtung, wie Pneumatikeinrichtung, hydro-pneumatische Einrichtung, elektronische Einrichtung, mechanische Einrichtung oder elektro-mechanische Einrichtung ist und/oder die die Krafterzeugungseinrichtung (112) dazu ausgebildet ist, die Anpresskraft (F_{hydraulisch}) zu erzeugen und/oder bereitzustellen.

4. Verfahren nach wenigstens einem der vorhergehenden Ansprüche, **dadurch gekennzeichnet, dass** die Krafterzeugungseinrichtung (112) einen Antrieb, insbesondere einen hydraulischen, pneumatischen, hydro-pneumatischen, elektronischen oder elektro-mechanischen Antrieb, wie Linearantrieb oder Servoantrieb, aufweist.

5. Verfahren nach wenigstens einem der vorhergehenden Ansprüche, **dadurch gekennzeichnet, dass** die Anpresskraft (F_{hydraulisch}) eine Anpressdruckkraft und/oder hydraulische Kraft (F_{hydraulisch}), wie Hydraulikkraft, ist und/oder die Anpresskraft (F_{hydraulisch}) die Differenz zwischen einer, insbesondere axialen, Vorwärtskraft und einer, insbesondere axialen, Rückwärtskraft ist.

6. Verfahren nach wenigstens einem der vorhergehenden Ansprüche, **dadurch gekennzeichnet, dass** zumindest ein Parameter, wie Hydraulikparameter, der Krafterzeugungseinrichtung (112) bereitgestellt wird (S12), und/oder dass ein Druck, wie Anpressdruck und/oder Hydraulikdruck, basierend auf der bereitgestellten und/oder ermittelten Anpresskraft (F_{hydraulisch}) und/oder dem bereitgestellten zumindest einen Parameter, wie Hydraulikparameter, der Krafterzeugungseinrichtung (112) berechnet wird (S14).

7. Verfahren nach Anspruch 6, **dadurch gekennzeichnet, dass** der berechnete Druck, wie Anpressdruck und/oder Hydraulikdruck, zum Anpassen des in der Granuliervorrichtung (100) vorhandenen Drucks, wie Anpressdruck und/oder Hydraulikdruck, insbesondere als neuer Sollwert, bereitgestellt wird (S15).

8. Verfahren nach Anspruch 6 oder 7, **dadurch gekennzeichnet, dass** der berechnete Druck, wie Anpressdruck und/oder Hydraulikdruck, ein, insbesondere axialer, Vorwärtsdruck der Krafterzeugungseinrichtung (112), insbesondere der Hydraulikeinrichtung (112), ist und/oder dass der zumindest eine Parameter, wie Hydraulikparameter, eine dem berechneten Druck, wie Anpressdruck und/oder Hydraulikdruck, zugeordnete erste Fläche, wie Kolbenfläche und/oder Kolbengesamtfläche, der Krafterzeugungseinrichtung (112), insbesondere der Hydraulikeinrichtung (112), ist und/oder ein, insbesondere axialer, Rückwärtsdruck der Krafterzeugungseinrichtung (112), insbesondere der Hydraulikeinrichtung (112), ist und/oder eine dem Rückwärtsdruck zugeordnete zweite Fläche, wie Kolbenfläche und/oder Kolbengesamtfläche, der Krafterzeugungseinrichtung (112), insbesondere der Hydraulikeinrichtung (112), ist.

9. Verfahren nach Anspruch 8, **dadurch gekennzeichnet, dass** der Druck, wie Anpressdruck und/oder Hydraulikdruck, insbesondere Vorwärtsdruck, basierend auf der dem Druck zugeordneten ersten Fläche und/oder dem Rückwärtsdruck und/oder der dem Rückwärtsdruck zugeordneten zweiten Fläche berechnet wird.

10. Verfahren Anspruch 8 oder 9, **dadurch gekennzeichnet, dass** der Rückwärtsdruck sensorisch erfasst wird und/oder die dem Druck, wie Anpressdruck und/oder Hydraulikdruck, insbesondere Vorwärtsdruck, zugeordnete erste Fläche und/oder die dem Rückwärtsdruck zugeordnete zweite Fläche vorgegeben sind oder werden.

11. Verfahren nach wenigstens einem der vorhergehenden Ansprüche, **dadurch gekennzeichnet, dass** die hydrodynamische Kraft (F_{hydrodynamisch}) berechnet oder sensorisch erfasst wird.

12. Verfahren nach wenigstens einem der vorhergehenden Ansprüche, **dadurch gekennzeichnet, dass** die hydrodynamische Kraft (F_{hydrodynamisch}) basierend auf einer Drehzahl, insbesondere Messerdrehzahl und/oder Messerkopfdrehzahl, berechnet und/oder geschätzt und/oder ermittelt wird.

13. Verfahren nach Anspruch 12, **dadurch gekennzeichnet, dass** die Drehzahl, insbesondere als Istwert, sensorisch erfasst und/oder eine Drehzahl als Sollwert vorgegeben wird.

14. Verfahren nach Anspruch 13, **dadurch gekennzeichnet, dass** die als Sollwert vorgegebene Drehzahl berechnet wird, insbesondere basierend auf einem Durchsatzwert, wie Materialdurchsatzwert, und/oder einer Granulatanzahl und/oder einem Korrekturfaktor und/oder einer Messeranzahl und/oder einer Lochanzahl der Lochplatte (104) berechnet wird.

15. Verfahren nach wenigstens einem der vorhergehenden Ansprüche 11 bis 14, **dadurch gekennzeichnet, dass** die hydrodynamische Kraft (F_{hydrodynamisch}) mittels einer Funktion, wie Polynomfunktion, berechnet und/oder geschätzt und/oder ermittelt wird, wobei die Drehzahl, insbesondere die als Istwert sensorisch erfasste Drehzahl, die Variable und/oder Unbestimmte der Funktion ist und/oder die Funktion eine Funktion ersten, zweiten, dritten, vierten oder höheren Grades ist und/oder die Funktion ein oder mehrere Koeffizienten aufweist, die durch ein oder mehrere Parameter definiert sind.

16. Verfahren nach Anspruch 15, **dadurch gekennzeichnet, dass** der ein oder die mehreren Parameter vorgegeben und/oder bestimmt, wie empirisch bestimmt, sind oder werden und/oder der ein oder die mehreren Parameter auf zumindest einer bei zumindest einem Betriebsmodus der Granuliervorrichtung (100) ermittelten Datenreihe basieren.

17. Verfahren nach wenigstens einem der vorhergehenden Ansprüche, **dadurch gekennzeichnet, dass** die Anpresskraft basierend auf einer hydrostatischen Kraft (F_{hydrostatisch}) ermittelt wird, wobei die hydrostatische (F_{hydrostatisch}) Kraft vorgegeben ist oder wird und/oder wobei die hydrostatische Kraft (F_{hydrostatisch}) basierend auf einem, insbesondere ermittelten, wie sensorisch erfassten, Wasserdruck und/oder einer, insbesondere vorgegebenen, Druckfläche bestimmt ist oder wird.

18. Verfahren nach wenigstens einem der vorhergehenden Ansprüche, **dadurch gekennzeichnet, dass** die Anpresskraft basierend auf einer Schmelzedruckkraft ermittelt wird, die insbesondere von einem mittels einer Extrusionsvorrichtung verursachten Schmelzedruck einer Materialschmelze abhängig ist.

19. Computerprogrammprodukt, das eine Steuerung (102) und/oder Vorrichtung, wie Granuliervorrichtung (100), dazu veranlasst, ein Verfahren nach wenigstens einem der vorhergehenden Ansprüche auszuführen und/oder umfassend Programmcodemittel, um bei einem Ausführen des Computerprogrammproduktes auf einem Prozessor ein Verfahren nach wenigstens einem der vorhergehenden Ansprüche durchzuführen.

20. Steuerung (102) für eine Granuliervorrichtung (100), wobei die Steuerung (102) dazu eingerichtet und bestimmt ist, ein Verfahren nach wenigstens einem der vorhergehenden Ansprüche 1 bis 18 auszuführen und/oder wobei die Steuerung (102) wenigstens einen Prozessor und das Computerprogrammprodukt nach Anspruch 19 aufweist.

21. Granuliervorrichtung (100) zur Granulierung von Materialsträngen, wie Kunststoff-Materialsträngen, die dazu eingerichtet und bestimmt ist, ein Verfahren nach wenigstens einem der vorhergehenden Ansprüche 1 bis 18 auszuführen und/oder eine Steuerung (102) nach Anspruch 20 aufweist.

22. Granuliervorrichtung (100) nach Anspruch 21, umfassend:
- eine Lochplatte (104) zur Erzeugung von Materialsträngen;
- einen Messerkopf (106) mit zumindest einem Messer (108), der zur Erzeugung von Granulat aus den Materialsträngen an einer stromabwärtigen Seite der Lochplatte (104) angeordnet ist;
- eine Antriebseinrichtung zum Drehantreiben des Messerkopfs (106) um eine Drehachse; und
- eine Krafterzeugungseinrichtung (112), insbesondere Hydraulikeinrichtung (112), zum Drücken des zumindest einen Messers (108) mit einer Anpresskraft und/oder einem Anpressdruck gegen die Lochplatte (104).

23. Verfahren zur Granulierung von Materialsträngen, wie Kunststoff-Materialsträngen, mit den Schritten:
- Bereitstellen (S21) einer Granuliervorrichtung (100) nach wenigstens einem der Ansprüche 21 bis 22;
- Fördern (S22) einer Materialschmelze, wie Kunststoffmaterialschmelze, durch die Lochplatte (104) derart, dass Materialstränge erzeugt werden; und
- Drehantreiben (S23) des Messerkopfs (106) mittels der Antriebseinrichtung derart, dass die Materialstränge mittels des zumindest einen Messers (108) zu Granulat geschnitten werden, wobei die Krafterzeugungseinrichtung (112), insbesondere Hydraulikeinrichtung (112), das zumindest eine Messer (108) mit der Anpresskraft und/oder dem Anpressdruck gegen die Lochplatte (104) drückt.
